# EUROPEAN PATENT SPECIFICATION

(11) **EP 2 294 123 B1**
(45) Date of publication and mention of the grant of the patent: **01.06.2016**
(21) Application number: 08774539.4
(22) Date of filing: 30.06.2008
(51) Int. Cl.: C08K 5/1525, C08K 5/17, C08L 21/00, B60C 1/00

(54) **TYRE MADE OF A CROSSLINKABLE ELASTOMERIC COMPOSITION COMPRISING AN OXETANE DERIVATIVE AND AN AMINO ACID**
REIFEN AUS EINER VERNETZBAREN ELASTOMEREN ZUSAMMENSETZUNG UMFASSEND EIN OXETANDERIVAT UND EINE AMINOSÄURE
PNEU FAIT D'UNE COMPOSITION ÉLASTOMÈRE RÉTICULABLE COMPRENANT UN DÉRIVÉ D'OXÉTANE ET UN ACIDE AMINÉ

(43) Date of publication of application: 16.03.2011
(73) Proprietor: Pirelli Tyre S.p.A., 20126 Milano (IT)
(72) Inventor: ROSSIELLO, Luigia, I-20126 Milano (IT); CAPRIO, Michela, I-20126 Milano (IT); NAHMIAS NANNI, Marco, I-20126 Milano (IT)
(74) Representative: Allaix, Roberto
(86) International application number: PCT/EP2008/058386
(87) International publication number: WO 2010/000299

(56) References cited:
- EP-A- 0 943 466
- JP-A- 2004 323 564
- US-A1- 2003 135 006

## Description

### Field of the invention

The present invention generally relates to a tyre and to a crosslinkable elastomeric composition comprising an oxetane derivative and an amino acid. More in particular, the present invention relates to a tyre including at least one structural element obtained by crosslinking a crosslinkable elastomeric composition comprising an oxetane derivative and an amino acid preferably having the general formulas described hereinbelow.

### Background of the invention

In the rubber industry, in particular that of tyres manufacturing, it is known practice to use additives with the crosslinkable elastomeric compositions to improve the performances of the finished product (i.e. the crosslinked manufactured product).

For example, static and dynamic moduli of the elastomeric compositions may be increased by using a large amount of carbon black, or a very fine and structured carbon black. However, the above ways of increasing static and dynamic moduli may lead to a number of drawbacks.

It is known that carbon black gives the crosslinked manufactured product pronounced hysteresis properties, that is to say an increase in the dissipated heat under dynamic conditions, which results in an increase in the rolling resistance of the tyre and the fuel consumption. In addition, a large amount of carbon black causes an increase in the viscosity of the elastomeric composition and, consequently, has a negative impact on the processability and extrudability of the crosslinkable elastomeric composition.

To overcome the drawbacks caused by the use of carbon black, the so-called "white" reinforcing fillers are usually employed, in particular silica, in partial or total replacement for the carbon black.

However, although the use of said white reinforcing fillers leads to good tear resistance, it also entails a series of drawbacks essentially related to the poor affinity of these fillers with respect to the elastomeric polymers commonly used in the production of tyres. In particular, to obtain a good degree of dispersion of the silica in the elastomeric polymers, it is necessary to subject the elastomeric compositions to a prolonged thermo mechanical blending action.

Moreover, in addition to high tear resistance and low rolling resistance, a finished tyre needs to have a good adherence to both dry and wet roads. These characteristics are widely dependent from the viscoelastic properties of the crosslinkable elastomeric compositions used in the manufacturing of the tyre.

Conventionally, mixtures of different kinds of natural and synthetic rubbers, such as, for example, mixtures of styrene-butadiene rubber and polybutadiene rubber, are used in the manufacture of tyre in order to get a good balance of the above mentioned tyre requirements.

Japanese Patent Application JP2004/323564 discloses a rubber composition for vulcanization comprising (a) an epihalohydrin rubber, (b) an oxetane compound, (c) an acid acceptor, and (d) a vulcanizing agent. The composition is said to provide a epihalohydrin rubber composition for vulcanization having improved heat resistance.

US Patent No. 4,289,861 discloses a curable composition consisting essentially of (A) at least one rubber selected from the group consisting of a styrene-butadiene rubber, an acrylonitrile-butadiene rubber, a polybutadiene rubber, an acrylonitrile-isoprene rubber, an alfin rubber, a butadiene-methyl methacrylate rubber, a polyisoprene rubber, an acrylonitrile-butadiene-isoprene rubber, a carboxylated acrylonitrile-butadiene rubber, a propylene oxide rubber, a propylene-butadiene rubber, and natural rubber, (B) at least one curing agent selected from the group consisting of sulfur and sulfur donors, and (C) at least one compound, as a vulcanization accelerator not requiring an activator, selected from the group consisting of arginine, lysine, hydroxy-lysine, ornithine, proline, hydroxyproline, leucine, isoleucine, histidine, tryptophan, threonine, serine, homoserine, alanine, phenylalanine, valine, methionine, citrulline, tyrosine, asparagine, aspartic acid, glutamine, glutamic acid, and salts of these amino acids. The amino acids are said to exhibit very good accelerating effects when vulcanizing rubbers with sulfur and/or sulfur donors, and to quite obviate the conjoint use of activators.

The US Patent No. 4,273,897 discloses a vulcanizable composition comprising a bromobutyl rubber and a specific amino acid selected from the group of arginine, lysine, hydroxylysine, ornithine, cystine, asparagine, glutamine and citrulline. The amino acids are said to possess excellent vulcanizing effect on bromobutyl rubber but none of the deficiencies of conventional vulcanizing agents.

The US Patent No. 6,780,925 discloses the preparation of a silica reinforced rubber composition where alkoxysilane and/or sulfur cure reactions within the elastomer host are controlled by the use of a selected amino acid, or amino acid-containing protein, activator. The amino acid or amino acid-containing protein is said to be useful to interact with organosilanes and/or sulfur cure systems and to enhance the formation of the alkoxysilane condensation reaction product within an elastomer host, to enhance the silane/elastomer interactions as well as to provide some unique synergism with the sulfur cure system for the elastomer composition.

The US Patent Application No. 2003/0135006 discloses silica-reinforced rubber compositions where alkoxysilane and/or sulfur cure reactions within the elastomer host are controlled by the use of an amino acid and tyres having at least one component of such compositions.

### Summary of the invention

The Applicant has faced the problem of improving the viscoelastic properties of crosslinkable elastomeric compositions comprising reinforcing agents in such a way to obtain a finished tyre having a low rolling resistance and a high tear resistance together with good adherence to both dry and wet surfaces.

The Applicant has found that the above mentioned problem may be overcome by adding to the crosslinkable elastomeric compositions which may be advantageously used in the production of crosslinked manufactured products, in particular in the manufacturing of tyres, at least one oxetane derivative and at least one amino acid, preferably having given general formulas which will be better specified hereinbelow, said amino acid preferably comprising a substituent group able to react with at least one polymer of said crosslinkable elastomeric compositions.

In particular, the Applicant has found that the addition of said at least one oxetane derivative and at least one amino acid to the crosslinkable elastomeric compositions allows to obtain crosslinked manufactured products showing substantially unaltered or even improved mechanical properties.

In particular, the Applicant has found that the addition of said at least one oxetane derivative and at least one amino acid to the crosslinkable elastomeric compositions allows to obtain crosslinked manufactured products having an increased tensile modulus, and then an increased stiffness of the finished tyre with a better adherence to dry road.

Moreover, the Applicant has found that the addition of said at least one oxetane derivative and at least one amino acid to the crosslinkable elastomeric compositions does not increase the viscosity of the crosslinkable elastomeric compositions, which maintains a good flowability during the manufacturing, in particular during the manufacturing of the green tyres.

Furthermore, the Applicant has found that the addition of said at least one oxetane derivative and at least one amino acid to the crosslinkable elastomeric compositions allows to reduce the thermoplastic properties of the crosslinked manufactured products, so resulting in a finished tyre showing a lower heat dissipation and fuel consumption.

Moreover, the Applicant has also found that the addition of said at least one oxetane derivative and at least one amino acid to the crosslinkable elastomeric compositions allows to obtain crosslinked manufactured products showing a higher loss tangent (tan δ) at low temperatures and a lower loss tangent (tan δ) at high temperatures, and thus a better adherence to wet surfaces and a lower rolling resistance.

Without to be restricted to any specific hypothesis, the Applicant believes that the surprising results obtained by the addition of said at least one oxetane derivative and at least one amino acid to the crosslinkable elastomeric compositions of the invention are due to the ring-opening reactions between the oxetane derivative and the amino acid leading to addition products (like 1:1 addition products, but also linear or branched oligomers and/or polymers) probably able to further react with the elastomeric polymers of the elastomeric compositions during the vulcanization process and to confer the unexpected combination of properties to the resulting crosslinked manufactured products.

Accordingly, in a first aspect, the present invention relates to a tyre comprising at least one structural element including a crosslinked elastomeric material obtained by crosslinking a crosslinkable elastomeric composition comprising:
(a) 100 phr of at least one elastomeric polymer;
(b) from 0.1 phr to 120 phr, preferably from 20 phr to 90 phr, of at least one reinforcing filler;
(c) from 0.01 phr to 20 phr, preferably from 0.1 phr to 10 phr, of at least one oxetane derivative, said oxetane derivative preferably having the following general formula (I): 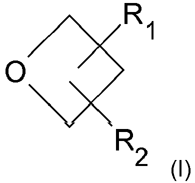 wherein
   R₁ is a linear or branched alkyl group having from 1 to 6 carbon atoms, or a linear or branched alkylaryl group having from 7 to 12 carbon atoms, and
   R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.
(d) from 0.01 phr to 10 phr, preferably from 0.1 phr to 5 phr, of at least one amino acid, said amino acid preferably having the following general formula (II): 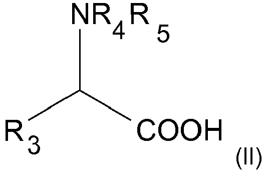 wherein
   R₃ is hydrogen, a linear or branched alkyl group having from 1 to 6 carbon atoms, or a linear or branched alkylaryl group having from 7 to 12 carbon atoms, optionally comprising one or more substituent selected from the group of hydroxy, alkoxy, amino, thio, dithio, alkylthio, alkyldithio, acyl, carboxyl, carboxamido, 4-imidazole, 3-indol, and guanidino, and
   R₄ and R₅, equal or different each other, are hydrogen, a linear or branched alkyl group having from 1 to 6 carbon atoms, a linear or branched alkylaryl group having from 7 to 12 carbon atoms, or a linear or branched acyl group having from 1 to 6 carbon atoms.

According to one preferred embodiment, said tyre comprises:
- a carcass structure of a substantially toroidal shape, having opposite lateral edges associated with respective right-hand and left-hand bead structures defined by respective carcass turn-up, said bead structures comprising at least one bead core and at least one bead filler;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is at least one of said tread band, said pair of sidewalls, and said bead filler.

Preferably, said tyre can further comprise:
- a tread underlayer applied in a radially internal position with respect to said tread band; and, optionally
- a pair of sidewall inserts extending radially from each of said bead structures to the corresponding lateral edge of said tread band;
wherein said structural element is at least one of said tread underlayer, or said pair of sidewall inserts.

For the purposes of the present description and of the claims which follow the term "phr" means the parts by weight of a given component of the crosslinkable elastomeric composition per 100 parts by weight of the elastomeric polymer(s).

The present invention, in at least one of the abovementioned aspects, may show one or more of the preferred characteristics hereinafter described.

According to one preferred embodiment, said at least one oxetane derivative (c) has the following general formula (I): 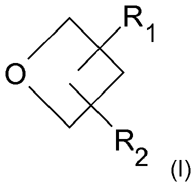 wherein
R₁ is a linear or branched alkyl group having from 1 to 6 carbon atoms, or a linear or branched alkylaryl group having from 7 to 12 carbon atoms, and
R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.

The substituent groups represented by R₁ and R₂ can be linked to any position of the oxetane ring, to give 2-2, 2-3, 2-4, or 3-3 bi-substituted oxetane derivatives. Preferably, the substituent groups represented by R₁ and R₂ are both linked to the 3-position. For sake of clarity, the above mentioned position numbers of the oxetane ring follow the IUPAC rule assigning 1 to the oxygen heteroatom and the following numbers to the carbon atoms.

Preferably, in the above formula (I), R₁ is a linear or branched alkyl group having from 1 to 3 carbon atoms or branched alkylaryl group having from 7 to 9 carbon atoms, and R₂ is a linear or branched alkyl group having from 1 to 3 carbon atoms, or a linear or branched alkylaryl group having from 7 to 9 - 10 - carbon atoms, optionally comprising one or more substituent selected from the group of halide, hydroxy, alkoxy, haloalkoxy, amino, nitro, thio, cyano, acyl and acyloxy.

More preferably, in the above formula (I), R₁ is a linear or branched alkyl group having from 1 to 3 carbon atoms, and R₂ is a linear or branched alkyl group having from 1 to 3 carbon atoms, optionally comprising one or more substituent selected from the group of halide, hydroxy, alkoxy, haloalkoxy, and thio.

Advantageously, the oxetane derivatives (c) used in the present invention are selected from the compounds exemplified below, wherein each compound is represented by the general formula (a) with the exemplified R₁ and R₂ groups.

| Compound | 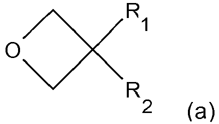 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | - CH₂CH₂ CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

The oxetane derivatives used in the present invention are prepared by technique known in the art, such as those described in US 5,247,103, or are commercially available from Perstorp Specialty Chemical AB, Sweden, Chemos GmbH, Germany, and Advanced Technology & Industrial Co., Ltd., Hong Kong.

The oxetane derivatives useful in the present invention are added to the crosslinkable elastomeric composition in an amount ranging from 0.01 phr to 20 phr, preferably from 0.1 phr to 10 phr, and more preferably from 0.2 phr to 5 phr.

According to one preferred embodiment, said at least one amino acid (d)has the following general formula (II): 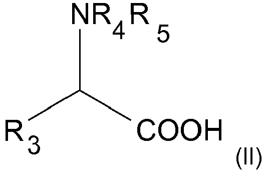 wherein
R₃ is hydrogen, a linear or branched alkyl group having from 1 to 6 carbon atoms, or a linear or branched alkylaryl group having from 7 to 12 carbon atoms, optionally comprising one or more substituent selected from the group of hydroxy, alkoxy, amino, thio, dithio, alkylthio, alkyldithio, acyl, carboxyl, carboxamido, 4-imidazole, 3-indol, and guanidino, and
R₄ and R₅, equal or different each other, are hydrogen, a linear or branched alkyl group having from 1 to 6 carbon atoms, a linear or branched alkylaryl group having from 7 to 12 carbon atoms, or a linear or branched acyl group having from 1 to 6 carbon atoms.

Advantageously, the amino acid useful in the present invention are selected from the compounds exemplified below.

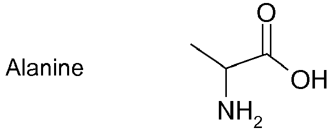

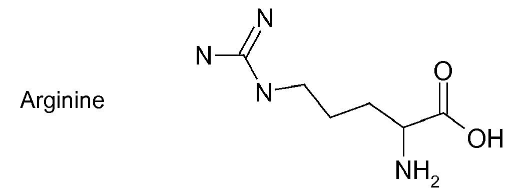

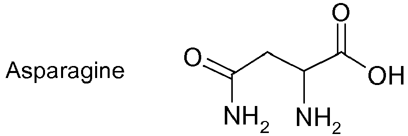

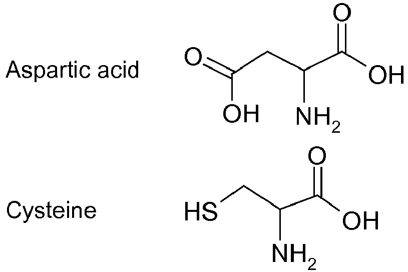

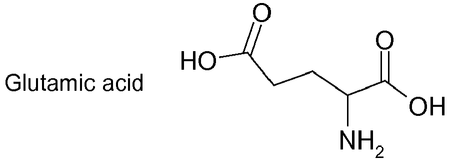

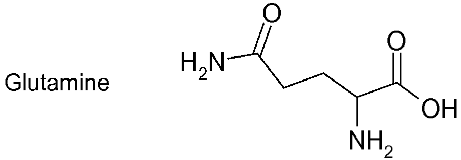

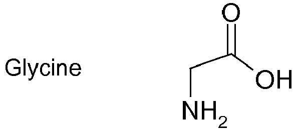

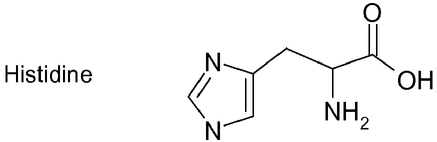

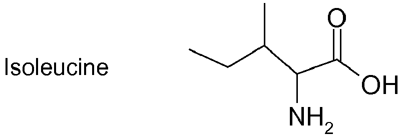

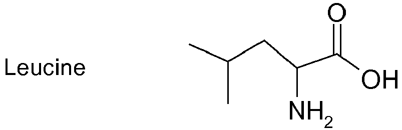

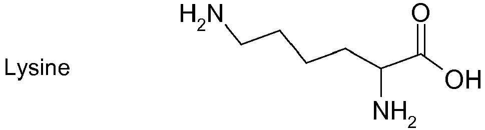

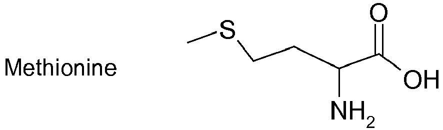

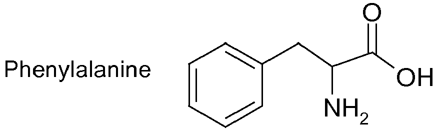

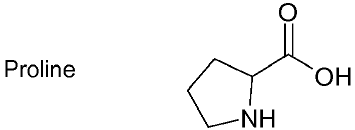

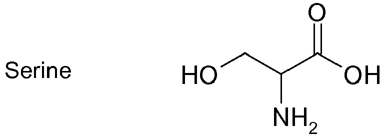

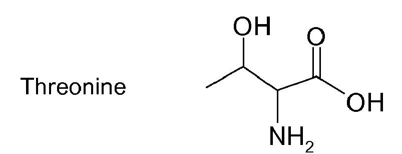

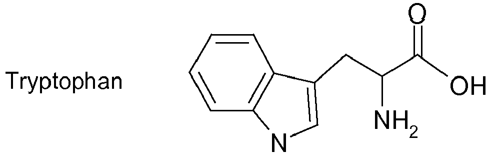

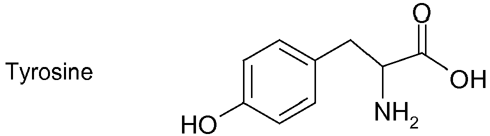

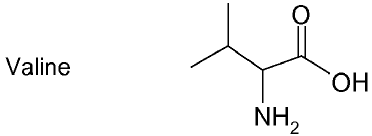

More preferably, the amino acids useful in the present invention comprises the acyl derivative of the amino acids exemplified above, such as, for example, N-acetyl alanine, N-acetyl cysteine, N-acetyl serine, N-acetyl leucine and N-acetyl lysine.

Advantageously, other useful amino acids to be used in the present invention comprises non standard amino acids like cystine, glutathione, penicillamine, hydroxyproline, hydroxylysine, citrulline, mimosine, theanine, phenylglycine, sarcosine, ethionine, buthionine, norvaline, norleucine, carnosine, luciferin, felinine, captopril and N-glycyl leucine.
The amino acids used in the present invention are commercially available from Acros Organics, Belgium, AppliChem GmbH, Germany, Shenzhen Sailing Chemical Co., China, or Oakwood Products, Inc., USA.

The amino acids useful in the present invention are added to the crosslinkable elastomeric composition in an amount ranging from 0.01 phr to 10 phr, preferably from 0.1 phr to 5 phr, and more preferably from 0.2 phr to 3 phr.

According to one preferred embodiment, said at least one elastomeric polymer (a) may be selected, for example, from (a₁) diene elastomeric polymers which are commonly used in sulfur-crosslinkable elastomeric compositions, that are particularly suitable for producing tyres, that is to say from elastomeric polymers or copolymers with an unsaturated chain having a glass transition temperature (Tg) generally below 20°C, typically in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Typically, the obtained polymers or copolymers contain said at least one comonomer selected from monovinylarenes and/or polar comonomers in an amount of not more than 80% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, alpha-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer (a₁) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene terpolymers, styrene/1 ,3-butadiene/acrylonitrile terpolymers, or mixtures thereof.

Natural rubber and polyisoprene rubber are preferably employed for internal structural elements, such as, for example, bead filler. Other synthetic rubbers like butadiene rubbers and styrene/butadiene rubbers, are preferably employed for external structural elements, such as, for example, tread band, sidewall, tread underlayer and sidewall inserts.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and a-olefins generally containing from 3 to 12 carbon atoms, such as, for example, propylene, 1-butene, 1-pentene, 1-hexene, 1-octene, or mixtures thereof. The following are preferred: copolymers between ethylene and an a-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According to the present invention, said at least one reinforcing filler (b) may be selected from those commonly used for crosslinked manufactured products, in particular for tyres, such as, for example, carbon black, silica, alumina, aluminosilicates, calcium carbonate, kaolin, or mixtures thereof. Carbon black, silica and mixture thereof are particularly preferred.

According to one preferred embodiment, said carbon black reinforcing filler may be selected from those having a surface area of not less than 20 m²/g (determined according to ASTM D6556-07 Standard Test Method for Carbon Black-Total and External Surface Area by Nitrogen Adsorption).

According to one preferred embodiment, said silica reinforcing filler may be selected, for example, from: pyrogenic silica, precipitated amorphous silica, wet silica (hydrated silicic acid), dry silica (anhydrous silicic acid), fumed silica, vegetal silica (i.e., silica obtained from agricultural waste, like rice hulls and rice straw), calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to ASTM D1993-03 Standard Test Method for Precipitated Silica-Surface Area by Multipoint BET Nitrogen Adsorption, gives the best measure of the reinforcing character of different silicas.

Silica reinforcing fillers which may be advantageously used according to the present invention, preferably have a surface area of from about 32 m²/g to about 400 m²/g, more preferably of from about 100 m²/g to about 250 m²/g, still more preferably of from about 150 m²/g to about 220 m²/g. The pH of said silica reinforcing fillers is, generally, of from about 5.5 to about 7.0, preferably of from about 5.5 to about 6.8.

Examples of silica reinforcing fillers which may be used according to the present invention and are available commercially are the products known by the name of Hi-Sil^{®} 190, Hi-Sil^{®} 210, Hi-Sil^{®} 215, Hi-Sil^{®} 233, Hi-Sil^{®} 243, from PPG Industries (Pittsburgh, Pa.); or the products known by the name of Ultrasil^{®} VN2, Ultrasil^{®} VN3 from Degussa; or the product known under the name of Zeosil^{®} 1165MP from Rhodia.

When a reinforcing filler comprising silica is present, the crosslinkable elastomeric composition may advantageously incorporate a silane coupling agent capable of interacting with the silica and of linking it to the elastomeric polymer(s) during the vulcanization.

Coupling agents that are preferably used are those based on silane which may be identified, for example, by the following structural formula (I):

(R₂)₃Si-CₜH₂ₜ-X (I)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer between 1 and 6 inclusive; X is a group selected from: nitroso, mercapto, amino, epoxide, vinyl, imide, chloro, -(S)ᵤCₜH₂ₜ-Si-(R₂)₃ or or -S-COR₂ in which u and t are integers of from 1 to 6 extremes included and the groups R₂ are defined as reported above.

Among the coupling agents that are particularly preferred are bis(3-triethoxysilylpropyl) tetrasulfide and bis(3-triethoxysilylpropyl) disulfide. Said coupling agents may be used as such or as a suitable mixture with an inert filler (for example carbon black) so as to facilitate their incorporation into the crosslinkable elastomeric composition.

The crosslinkable elastomeric composition above reported may be vulcanized according to known techniques, in particular with sulfur-based vulcanizing systems commonly used for elastomeric polymers. To this end, in the composition, after one or more steps of thermomechanical processing, a sulfur-based vulcanizing agent is incorporated, preferably together with vulcanization activators and accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators, activators and/or retardants known to those skilled in the art.

Said sulfur or derivatives thereof may be selected, for example, from (i) soluble sulfur (crystalline sulfur); (ii) insoluble sulfur (polymeric sulfur); (iii) sulfur dispersed in oil (for example 33% sulfur known under the trade name Crystex^{®} OT33 from Flexsys); (iv) sulfur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD); or mixtures thereof.

Said sulfur or derivatives thereof are preferably employed in the crosslinkable elastomeric composition of the present invention in an amount of from about 0.05 phr to about 10 phr, more preferably from about 0.1 phr to about 5 phr, and even more preferably from about 0.2 phr to about 2 phr.

According to a further preferred embodiment, the crosslinkable elastomeric composition of the present invention, further comprises at least one vulcanization activator.

Vulcanization activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Said vulcanization activators are preferably employed in the crosslinkable elastomeric composition of the present invention in an amount of from about 0.5 phr to about 10 phr, more preferably of from 1 phr to 5 phr, and even more preferably of from 1.5 phr to 3.5 phr.

According to a further preferred embodiment, the crosslinkable elastomeric composition of the present invention, further comprises at least one vulcanization accelerator.

Vulcanization accelerators that are commonly used may be selected, for example, from: dithiocarbamates, guanidine, thiourea, thiazoles, sulfenamides, thiurams, amines, xanthates, or mixtures thereof.

Said vulcanization accelerators are preferably employed in the crosslinkable elastomeric composition of the present invention in an amount of from 0.05 phr to 10 phr, more preferably from 0.1 phr to 5 phr, and even more preferably from 0.5 phr to 3 phr.

According to a further preferred embodiment, the crosslinkable elastomeric composition of the present invention, further comprises at least one vulcanization retardant.

Vulcanization retardants that are commonly used may be selected, for example, from: urea, N-cyclohexyl-2-benzothiazolyl sulfenamide, N-cycloesilphtalimide, N-cyclohexylthiophthalimides, N-Nitrosodiphenylamine, or mixtures thereof.

Said vulcanization retardants are preferably employed in the crosslinkable elastomeric composition of the present invention in an amount of from 0.001 phr to 1 phr, more preferably from 0.005 phr to 0.5 phr, and even more preferably from 0.01 phr to 0.3 phr.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, antiozonants (in particular of the p-phenylenediamine type), waxes, modifying resins, fibres (for example Kevlar^{®} pulp), or mixtures thereof.

For the purpose of further improving the processability, a plasticizer generally selected from mineral oils, vegetable oils, synthetic oils, polyalkylenglycols, or mixtures thereof, such as, for example, aromatic oil, naphthenic oil, phthalate oils, soybean oil, polyethylene glycol (PEG plasticizers) or mixtures thereof, may be added to said crosslinkable elastomeric composition. The amount of plasticizer generally ranges of from 0 phr to 70 phr, preferably of from of 1 phr to 30 phr.

The above reported crosslinkable elastomeric composition may be prepared by mixing together the elastomeric polymer (a), the reinforcing filler (b), the oxetane derivative (c), and the amino acid (d) above reported, with the other additives optionally present, according to techniques known in the art.

Alternatively, the oxetane derivative (c), and the amino acid (d) may be premixed with the elastomeric polymer(s) so as to form a masterbatch which will be subsequently mixed with the remaining components of the crosslinkable elastomeric composition.

The mixing steps may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

The process for producing the tyre according to the present invention may be carried out according to techniques and using apparatus that are known in the art, said process including manufacturing a green tyre, and subsequently moulding and vulcanizing the green tyre.

### Brief description of the drawings

The present invention will now be illustrated in further detail by means of illustrative embodiments, with reference to the attached figures wherein:
- Fig. 1 is a view in cross-section of a portion of a tyre made according to one embodiment of the present invention;
- Fig. 2 is a view in cross-section of a portion of a tyre made according to a further embodiment of the present invention.

### Detailed description of the preferred embodiments

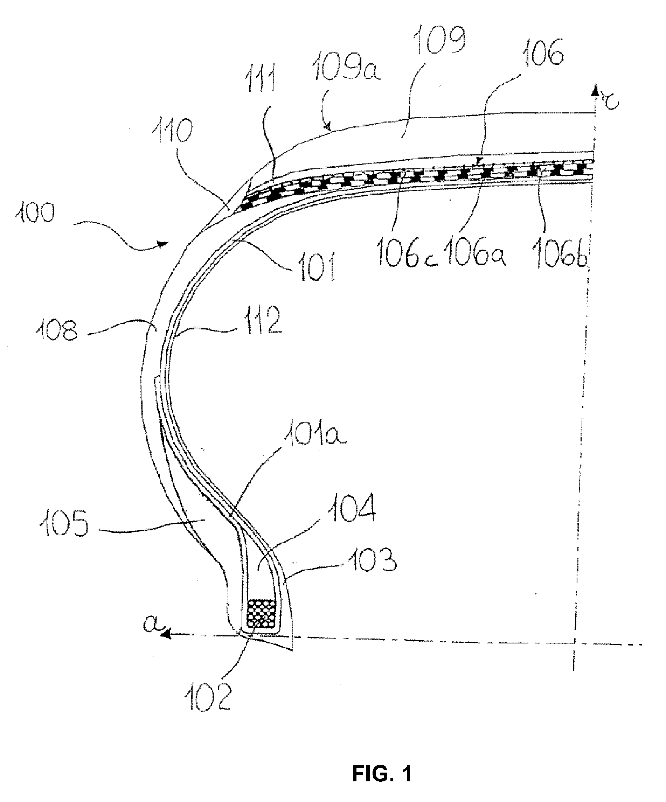

With reference to Fig. 1, "a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite lateral edges of which are associated with respective bead structures comprising at least one bead core (102) and at least one bead filler (104). The association between the carcass ply (101) and the bead core (102) is achieved here by turning back the opposite lateral edges of the carcass ply (101) around the bead core (102) so as to form the so-called carcass turn-up (101 a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-up around said annular inserts, the coupling being provided by a second carcass ply (not represented in Fig. 1) applied externally over the first.

The carcass ply (101) usually comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The core (102) is enclosed in a bead (103), defined along an inner circumferential edge of the tyre (100), with which the tyre engages on a rim (not represented in Fig. 1) forming part of a vehicle wheel. The space defined by each carcass turn-up (101 a) contains a bead filler (104), which may comprise an elastomeric composition according to an aspect of the present invention.

An anti-abrasive layer (105) is usually placed in an axially external position relative to the carcass turn-up (101a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109), which may comprise an elastomeric composition according to an aspect of the present invention, is applied circumferentially in a position radially external to the belt structure (106). The lateral edges of the tread band (109) are connected to the side walls (108). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A sidewall (108), which may comprise an elastomeric composition according to an aspect of the present invention, is also applied externally onto the carcass ply (101), this sidewall extending, in an axially external position, from the bead (103) to the end of the belt structure (106).

A tread underlayer (111), which may comprise an elastomeric composition according to an aspect of the present invention, may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tyres, a rubber layer (112) generally known as a liner, which provides the necessary impermeability to the inflation air of the tyre, may also be provided in an inner position relative to the carcass ply (101).

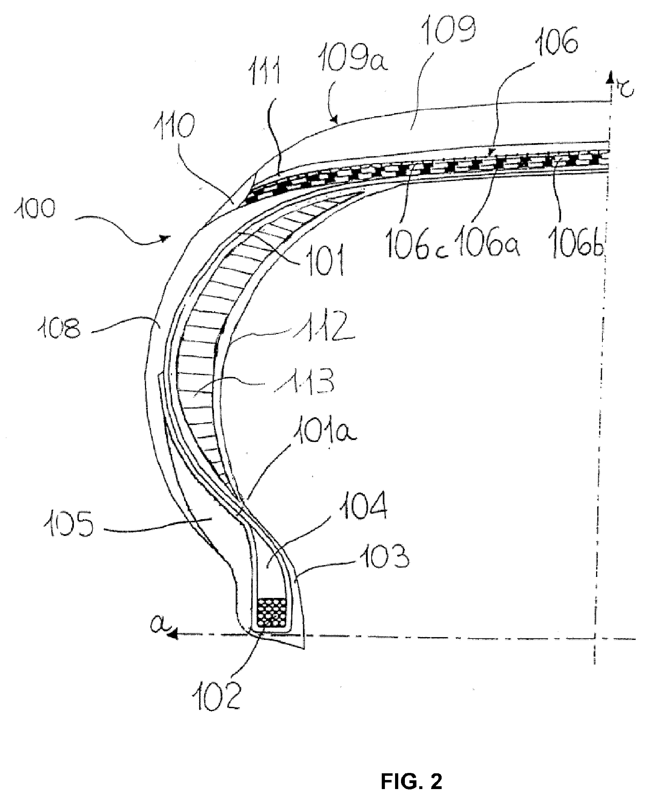

Fig. 2 shows a tyre (100) having a structure as described in Fig. 1 (the same reference numbers have the same meanings as disclosed in Fig. 1) further comprising a sidewall insert (113), which may comprise an elastomeric composition according to an aspect of the present invention. The sidewall insert (113) extends radially between the bead structure (103) and the lateral edge of the tread band (109). The sidewall insert (113) is placed in an axially internal or external position with respect to the carcass ply: for example, as represented in Fig. 2, the sidewall insert (113) is placed between the carcass ply (101) and the liner (112).

Alternatively, in the case more than one carcass ply is present, a sidewall insert (113) may be placed between two of said carcass plies (not represented in Fig. 2).

Alternatively, a sidewall insert (113) may be placed between the carcass ply and the sidewall (not represented in Fig. 2). More than one sidewall insert may be present as disclosed, for example, in United States Patent US 5,238,040, or in European Patent Application EP 943,466.

Said sidewall insert (113) is usually used in the case of extended mobility tyres such as, for example, run flat tyres.

The present invention will be further illustrated below by means of a number of preparation examples, which are given for purely indicative purposes and without any limitation of this invention.

The samples of the following examples were evaluated according to the following tests and measurements.

The Mooney viscosity ML(1+4) at 100°C was measured according to Standard ISO 289-1:2005, on the non-crosslinked elastomeric compositions obtained as described below.

The tensile modulus (100% Modulus and 300% Modulus), the tensile strength, as well as the stress at break, the elongation at break and the energy at break, were measured according to Standard ISO 37:2005, on samples of the elastomeric compositions described below crosslinked at 170°C, for 10 min.

The hardness in IRHD degrees (at 23°C or at 100°C) according to Standard ISO 48:2007 and the Shore hardness according to ISO 7619-1:2004 were measured on samples of the elastomeric compositions vulcanized at 170°C, for 10 min.

The MDR rheometric analysis was carried out using a Monsanto MDR rheometer, the tests being carried out at 170°C, for 30 min, at an oscillation frequency of 1.66 Hz (100 oscillations per minute) and an oscillation amplitude of ±0.5°.

The dynamic mechanical properties, were measured using an Instron dynamic device in the traction-compression mode according to the following methods. A test piece of the crosslinked elastomeric composition (crosslinked at 170°C, for 10 min) having a cylindrical form (length = 25 mm; diameter = 12 mm), compression-preloaded up to a 25% longitudinal deformation with respect to the initial length, and kept at the prefixed temperature (10°C, 23°C, and 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and loss factor values (Tan δ). The Tan δ value is calculated as a ratio between viscous modulus (E") and elastic modulus (E').

### EXAMPLE 1

### Preparation of elastomeric compositions 1 to 4

The elastomeric compositions 1 to 4 given in Table 1 were prepared as follows (the amounts of the various components are given in phr).

All the components, except sulfur and accelerators (CBS), were mixed together in an internal mixer (model Pomini PL 1.6) for about 5 min (1 st Step). As soon as the temperature reached 145±5°C, the elastomeric composition was discharged. The sulfur and accelerator (CBS), were then added and mixing was carried out in an internal mixer (model Thermo Haake Rheomix 3000p) for about 5 minutes at a maximum temperature of 100°C (2nd Step).

**TABLE 1**

| SAMPLE | 1 (*) | 2 (*) | 3 (*) | 4 (^) |
|---|---|---|---|---|
| **1^{st} STEP** | | | | |
| NR | 10.0 | 10.0 | 10.0 | 10.0 |
| SBR1 | 20.0 | 20.0 | 20.0 | 20.0 |
| SBR2 | 96.25 | 96.25 | 96.25 | 96.25 |
| N234 | 7.50 | 7.50 | 7.50 | 7.50 |
| SiO₂ | 78.50 | 78.50 | 78.50 | 78.50 |
| Sl69 | 7.50 | 7.50 | 7.50 | 7.50 |
| Wax | 1.25 | 1.25 | 1.25 | 1.25 |
| Stearic Acid | 2.50 | 2.50 | 2.50 | 2.50 |
| CR | 12.50 | 12.50 | 12.50 | 12.50 |
| Zinc Oxide | 1.50 | 1.50 | 1.50 | 1.50 |
| ZS | 2.00 | 2.00 | 2.00 | 2.00 |
| TMQ | 1.25 | 1.25 | 1.25 | 1.25 |
| 6-PPD | 3.50 | 3.50 | 3.50 | 3.50 |
| NCys | - | 0.75 | - | 0.75 |
| TMPO | - | - | 2.00 | 2.00 |

| **2^{nd} STEP** | | | | |
|---|---|---|---|---|
| Sulfur | 1.80 | 1.80 | 1.80 | 1.80 |
| CBS | 2.80 | 2.80 | 2.80 | 2.80 |

| | | | | |
|---|---|---|---|---|
| (*): comparison. (^): invention NR: STR20 P93 natural rubber (Thaiteck Rubber, Thailand); SBR1: emulsion-prepared styrene/1,3-butadiene copolymer having a styrene content of 23.5% by weight (Intol^{®} 1500 - Polimeri Europa); SBR2: emulsion-prepared (37.5 parts of TDAE oil) styrene/1,3-butadiene copolymer having a styrene content of 40.0% by weight (Intol^{®} 1739-Polimeri Europa); N234: Carbon black (Cabot Corp.); SiO₂: Precipitated silica (Zeosil^{®} 1165 MP - Rhodia); Sl69: Bis(3-triethoxysilylpropyl)-tetrasulfide, (Degussa); WAX: Microcrystalline wax (Antilux^{Ⓡ} 654, Lanxess); CR: Coumarone resin (Novares C10, Ruetgers Chemicals, Germany) ZS: Polyplastol™ 6 - zinc salts of a mixture of fatty acids (Great Lakes Chemical Company) TMQ: polymerized 2,2,4-trimethyl-1,2-dihydroquinoline (Vulcanox® HS/LG - Lanxess); 6-PPD: phenyl-p-phenylendiamine (Akzo Nobel); Ncys: N-Acetyl cysteine (Aldrich) TMPO: Trimethylol propane oxetane (Perstorp S.p.A.) CBS: N-cyclohexyl-2-benzothiazyl-sulfenamide (Vulkacit^{®}CZ, Bayer); | | | | |

All the samples were evaluated as described above and the results were summarized in the following Table 2.

**TABLE 2**

| EXAMPLE | | 1 (*) | 2 (*) | 3 (*) | 4 (^) |
|---|---|---|---|---|---|
| GREEN PROPERTIES | | | | | |
| Money ML (1+4) 100°C | | 51.3 | 63.2 | 46 | 55.3 |

| STATIC MECHANICAL PROPERTIES | | | | | |
|---|---|---|---|---|---|
| 50% Modulus (MPa) | | 1.63 | 1.83 | 1.63 | 1.80 |
| 100% Modulus (MPa) | | 2.87 | 3.60 | 2.96 | 3.57 |
| 300% Modulus (MPa) | | 13.42 | 16.72 | 13.88 | 16.67 |
| Tensile strength (MPa) | | 19.12 | 19.49 | 17.61 | 19.27 |
| Elongation at break (%) | | 441.38 | 372.04 | 402.9 | 363.26 |
| Energy (J/cm³) | | 37.33 | 32.01 | 31.5 | 30.5 |
| Hardness IRHD (23°C) | | 75.6 | 75.5 | 75.1 | 74.9 |
| Hardness IRHD (100°C) | | 65.2 | 65.4 | 66.3 | 65.4 |
| Delta IRHD | | 10.4 | 10.1 | 8.8 | 9.5 |

| DYNAMIC MECHANICAL PROPERTIES | | | | | |
|---|---|---|---|---|---|
| 10°C | E' (MPa) | 18.692 | 18.855 | 18.318 | 18.078 |
| | Tan δ | 0.577 | 0.588 | 0.549 | 0.577 |
| 23°C | E' (MPa) | 13.328 | 13.543 | 13.342 | 13.176 |
| | Tan δ | 0.388 | 0.394 | 0.353 | 0.364 |
| 70°C | E' (MPa) | 6.553 | 6.482 | 6.908 | 6.689 |
| | Tan δ | 0.168 | 0.17 | 0.153 | 0.157 |

| | | | | | |
|---|---|---|---|---|---|
| (*): comparison. (^): invention | | | | | |

The data reported in Table 2 clearly show that, in comparison with the reference sample 1, the sample 2 has an increased viscosity, which is indicative of a more difficult workability in the manufacturing steps of the green product, and has Tan δ value at 70°C even higher than that of sample 1, which is indicative of an increased rolling resistance. Analogously, the sample 3 has a too lower Tan δ value at 10°C, which is indicative of a bad adherence on wet surfaces. On the contrary and surprisingly, the sample 4 has a high Tan δ value at 10°C and a low Tan δ value at 70°C, which is indicative of a good adherence on both wet and dry surfaces, together with a still good value of viscosity, increased values of moduli at 50%, 100%, and 300% elongation (this latter also being indicative of a high tear resistance), and a lower value of delta IRHD, which is indicative of lower thermoplastic properties of the crosslinked manufactured products, so resulting in a finished tyre showing a lower heat dissipation and fuel consumption.

### EXAMPLE 2

### Preparation of elastomeric compositions 5 to 10

The elastomeric compositions 5 to 10 given in Table 3 were prepared as follows (the amounts of the various components are given in phr).

All the components, except sulfur, accelerator (CBS), and retardant (PVI) were mixed together in an internal mixer (model Pomini PL 1.6) for about 5 min (1st Step). As soon as the temperature reached 145±5°C, the elastomeric composition was discharged. The sulfur, accelerator (CBS), and retardant (PVI) were then added and mixing was carried out in an internal mixer (model Thermo Haake Rheomix 3000p) for about 5 minutes at a maximum 5 temperature of 100°C (2nd Step).

**TABLE 3**

| SAMPLE | 5 (*) | 6 (*) | 7 (^) | 8 (^) | 9 (^) | 10 (^) |
|---|---|---|---|---|---|---|
| **1^{st} STEP** | | | | | | |
| BR | 32.0 | 32.0 | 32.0 | 32.0 | 32.0 | 32.0 |
| SBR3 | 68.0 | 68.0 | 68.0 | 68.0 | 68.0 | 68.0 |
| N234 | 10.0 | 10.0 | 10.0 | 10.0 | 10.0 | 10.0 |
| SiO₂ | 70.0 | 70.0 | 70.0 | 70.0 | 70.0 | 70.0 |
| *Sl69* | *5.60* | *5.04* | *5.60* | *5.04* | *5.60* | *5.04* |
| Wax | 1.50 | 1.50 | 1.50 | 1.50 | 1.50 | 1.50 |
| CR | 6.00 | 6.00 | 6.00 | 6.00 | 6.00 | 6.00 |
| Zinc Oxide | 2.20 | 2.20 | 2.20 | 2.20 | 2.20 | 2.20 |
| ZS | 2.50 | 1.00 | 1.00 | 2.50 | 1.00 | 1.00 |
| Plasticizer | 13.00 | 13.00 | 13.00 | 13.00 | 13.00 | 13.00 |
| TMQ | 1.00 | 1.00 | 1.00 | 1.00 | 1.00 | 1.00 |
| 6-PPD | 1.50 | 1.50 | 1.50 | 1.50 | 1.50 | 1.50 |
| *TMPO* | - | - | *2.00* | *2.00* | *2.00* | *2.00* |
| *NCys* | - | - | *0.75* | *0.75* | - | - |
| *NAla* | - | - | - | - | *0.75* | *0.75* |

| **2^{nd} STEP** | | | | | | |
|---|---|---|---|---|---|---|
| Sulfur | 0.80 | 0.80 | 0.80 | 0.80 | 0.80 | 0.80 |
| CBS | 2.20 | 2.20 | 2.20 | 2.20 | 2.20 | 2.20 |
| PVI | 0.30 | 0.30 | 0.30 | 0.30 | 0.30 | 0.30 |

| | | | | | | |
|---|---|---|---|---|---|---|
| 10 (*): comparison (^): invention BR: cis-1,4-polybutadiene (Europrene Neocis^{®} BR40 - Enichem Elastomeri); SBR3: solution-prepared (37.5 parts of TDAE oil) styrene/1,3-butadiene copolymer having a styrene content of 25.0% by weight (SLR 4630 - Dow Plastics); N234: Carbon black (Cabot Corp.); SiO₂: Precipitated silica (Zeosil^{®} 1165 MP - Rhodia); Sl69: Bis(3-triethoxysilylpropyl)-tetrasulfide, (Degussa); WAX: Microcrystalline wax (Antilux^{Ⓡ} 654, Lanxess); CR: Coumarone resin (Novares C10, Ruetgers Chemicals, Germany) ZS: Polyplastol™ 6 - zinc salts of a mixture of fatty acids (Great Lakes Chemical Company) Plasticizer: Treated distillated aromatic extract (Vivatec 500 - H&R Group) TMQ: polymerized 2,2,4-trimethyl-1,2-dihydroquinoline (Vulcanox® HS/LG - Lanxess); 6-PPD: phenyl-p-phenylendiamine (Akzo Nobel); TMPO: Trimethylol propane oxetane (Perstorp S.p.A.) NCys: N-Acetyl cysteine (Aldrich) NAla: N-Acetyl alanina (Aldrich) CBS: N-cyclohexyl-2-benzothiazyl-sulfenamide (Vulkacit^{®}CZ, Bayer); PVI: N-(cyclohexylthio)-phthalimide (Santogard^{®} PVI - Flexsys) | | | | | | |

All the samples were evaluated as described above and the results were summarized in the following Table 4.

**TABLE 4**

| | EXAMPLE | 5 (*) | 6 (*) | 7 (^) | 8 (^) | 9 (^) | 10 (^) |
|---|---|---|---|---|---|---|---|
| GREEN PROPERTIES | | | | | | | |
| | Money ML (1+4) 100°C | 74.1 | 75.9 | 66.3 | 68.2 | 65.9 | 67.1 |

| STATIC MECHANICAL PROPERTIES | | | | | | | |
|---|---|---|---|---|---|---|---|
| | 50% Modulus (MPa) | 1.58 | 1.50 | 1.68 | 1.62 | 1.65 | 1.58 |
| 100% Modulus (MPa) | | 2.75 | 2.57 | 2.91 | 2.8 | 2.86 | 2.73 |
| 300% Modulus (MPa) | | 11.74 | 10.92 | 11.87 | 11.93 | 11.67 | 11.1 |
| Tensile strength (MPa) | | 15.84 | 15.23 | 14.75 | 15.72 | 15.1 | 13.94 |
| Elongation at break (%) | | 407.29 | 419.72 | 386.95 | 400.07 | 397.19 | 386.66 |
| Hardness IRHD (23°C) | | 77.1 | 77 | 78.5 | 77.4 | 79.2 | 76.2 |

| DYNAMIC MECHANICAL PROPERTIES | | | | | | | |
|---|---|---|---|---|---|---|---|
| 10°C | E' (MPa) | 12.38 | 11.5 | 13.19 | 12.556 | 13.41 | 13.51 |
| | Tan δ | 0.369 | 0.384 | 0.389 | 0.403 | 0.395 | 0.402 |
| 23°C | E' (MPa) | 10.53 | 9.7 | 11.17 | 10.531 | 11.28 | 11.31 |
| | Tan δ | 0.275 | 0.285 | 0.298 | 0.305 | 0.296 | 0.297 |
| 70°C | E' (MPa) | 7.42 | 6.8 | 7.17 | 6.78 | 7.306 | 7.45 |
| | Tan δ | 0.144 | 0.147 | 0.142 | 0.144 | 0.145 | 0.145 |

| | | | | | | | |
|---|---|---|---|---|---|---|---|
| (*): comparison (^): invention | | | | | | | |

The data of Table 4 confirm the good results of samples 7 to 10, and in particular of samples 8 and 10, which show a good viscosity value, an increase of the values of the moduli and optimal values of Tan δ value at 10°C and at 70°C, in spite of the reduction of the amount of the silane compound (Sl69) which should have had a worsening effect on such values. Accordingly, the use of the elastomeric composition of the present invention allows to substantially reduce the amount of silane compounds.

## Claims

1. A tyre comprising at least one structural element including a crosslinked elastomeric material obtained by crosslinking a crosslinkable elastomeric composition comprising:
(a) 100 phr of at least one elastomeric polymer;
(b) from 0.1 phr to 120 phr of at least one reinforcing filler;
(c) from 0.01 phr to 20 phr of at least one oxetane derivative; and
(d) from 0.01 phr to 10 phr of at least one amino acid.

2. Tyre according to claim 1, said tyre comprising:
- a carcass structure of a toroidal shape, having opposite lateral edges associated with respective right-hand and left-hand bead structures defined by respective carcass turn-up, said bead structures comprising at least one bead core and at least one bead filler;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is at least one of said tread band, said pair of sidewalls, and said bead filler.

3. Tyre according to claim 2, wherein said tyre further comprises a tread underlayer applied in a radially internal position with respect to said tread band, wherein said structural element is said tread underlayer.

4. Tyre according to claim 2 or 3, wherein said tyre further comprises a pair of sidewall inserts extending radially between each of said bead structures and the corresponding lateral edge of said tread band, wherein said structural element is at least one of said pair of sidewall inserts.

5. Tyre according to any one of the preceding claims, wherein said oxetane derivative has the following general formula (I): 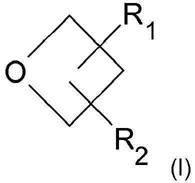 wherein
R₁ is a linear or branched alkyl group having from 1 to 6 carbon atoms, or a linear or branched alkylaryl group having from 7 to 12 carbon atoms, and
R₂ is a linear or branched alkyl group having from 1 to 6 carbon atoms, or a linear or branched alkylaryl group having from 7 to 12 carbon atoms, optionally comprising one or more substituent selected from the group of halide, hydroxy, alkoxy, haloalkoxy, amino, nitro, thio, cyano, acyl and acyloxy.

6. Tyre according to claim 5, wherein R₁ and R₂ are both linked to the 3-position of the oxetane ring.

7. Tyre according to claim 5, wherein R₁ is a linear or branched alkyl group having from 1 to 3 carbon atoms or branched alkylaryl group having from 7 to 9 carbon atoms, and R₂ is a linear or branched alkyl group having from 1 to 3 carbon atoms, or a linear or branched alkylaryl group having from 7 to 9 carbon atoms, optionally comprising one or more substituent selected from the group of halide, hydroxy, alkoxy, haloalkoxy, amino, nitro, thio, cyano, acyl and acyloxy.

8. Tyre according to claim 5, wherein said oxetane derivative is selected from the group consisting of the compounds listed in the following table:
| Compound | 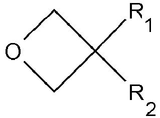 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | - CH₂CH₂ CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

9. Tyre according to any one of the preceding claims, wherein said oxetane derivative is added to the crosslinkable elastomeric composition in an amount ranging from 0.1 phr to 10 phr.

10. Tyre according to any one of the preceding claims, wherein said oxetane derivative is added to the crosslinkable elastomeric composition in an amount ranging from 0.2 phr to 5 phr.

11. Tyre according to any one of the preceding claims, wherein said amino acid has the following general formula (II): 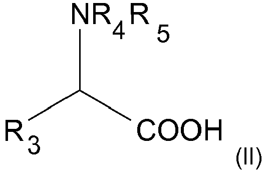 wherein
R₃ is hydrogen, a linear or branched alkyl group having from 1 to 6 carbon atoms, or a linear or branched alkylaryl group having from 7 to 12 carbon atoms, optionally comprising one or more substituent selected from the group of hydroxy, alkoxy, amino, thio, dithio, alkylthio, alkyldithio, acyl, carboxyl, carboxamido, 4-imidazole, 3-indol, and guanidino, and
R₄ and R₅, equal or different each other, are hydrogen, a linear or branched alkyl group having from 1 to 6 carbon atoms, a linear or branched alkylaryl group having from 7 to 12 carbon atoms, or a linear or branched acyl group having from 1 to 6 carbon atoms.

12. Tyre according to any one of the preceding claims, wherein said amino acid is selected from the group consisting of alanine, arginine, asparagine, aspartic acid, cysteine, glutamic acid, glutamine, glycine, histidine, isoleucine, leucine, lysine, methionine, phenylalanine, proline, serine, threonine, tryptophan, tyrosine, valine, and the N-acyl derivative thereof.

13. Tyre according to claim 12, wherein said amino acid is selected from the group consisting of N-acetyl alanine, N-acetyl cysteine, N-acetyl serine, N-acetyl leucine, and N-acetyl lysine.

14. Tyre according to claim 1, wherein said amino acid is selected from the group consisting of cystine, glutathione, penicillamine, hydroxyproline, hydroxylysine, citrulline, mimosine, theanine, phenylglycine, sarcosine, ethionine, buthionine, norvaline, norleucine, carnosine, luciferin, felinine, captopril, N-glycyl leucine, and the N-acyl derivative thereof.

15. Tyre according to any one of the preceding claims, wherein said amino acid is added to the crosslinkable elastomeric composition in an amount ranging from 0.1 phr to 5 phr.

16. Tyre according to any one of the preceding claims, wherein said at least one elastomeric polymer (a) is selected form the group comprising diene elastomeric polymers or copolymers having a glass transition temperature below 20°C.

17. Tyre according to any one of the preceding claims, wherein said at least one reinforcing filler (b) is selected from the group comprising carbon black, silica, alumina, aluminosilicates, calcium carbonate, kaolin, or mixtures thereof.

18. Tyre according to claim 17, wherein said crosslinkable elastomeric composition comprises said reinforcing filler in an amount of from 20 phr to 90 phr.

## Patentansprüche

1. Reifen umfassend zumindest ein Strukturelement mit einem vernetzten Elastomermaterial, das durch Vernetzen einer vernetzbaren Elastomerzusammensetzung erhalten wird, die Folgendes umfasst:
(a) 100 phr zumindest eines elastomeren Polymers;
(b) von 0,1 phr bis 120 phr zumindest eines verstärkenden Füllstoffs;
(c) von 0,01 phr bis 20 phr zumindest eines Oxetanderivats; und
(d) von 0,01 phr bis 10 phr zumindest einer Aminosäure.

2. Reifen nach Anspruch 1, wobei der Reifen umfasst:
- eine Karkassenstruktur einer ringförmigen Gestalt mit gegenüberliegenden Seitenkanten, die jeweiligen rechtsseitigen und linksseitigen Wulststrukturen zugeordnet sind, die durch jeweilige Karkassenaufstülpungen definiert werden, wobei die Wulststrukturen zumindest einen Wulstkern und zumindest ein Wulstfüllung umfassen;
- eine Gürtelstruktur, die in Bezug auf die Karkassenstruktur in einer radial äußeren Position angelegt ist;
- einen Laufflächenring, der in Bezug auf die Gürtelstruktur in einer radial äußeren Position angelegt ist;
- ein Paar Seitenwände, die seitlich auf gegenüberliegenden Seiten in Bezug auf die Karkassenstruktur angelegt sind;
wobei das Strukturelement zumindest der Laufflächenring und/oder das Paar Seitenwände und/oder die Wulstfüllung ist.

3. Reifen nach Anspruch 2, wobei der Reifen des Weiteren eine Laufflächenunterlage umfasst, die in einer radial einwärtigen Position relativ zu dem Laufflächenring angebracht ist, wobei das Strukturelement die Laufflächenunterlage ist.

4. Reifen nach Anspruch 2 oder 3, wobei der Reifen des Weiteren ein Paar Seitenwandeinsätze umfasst, die sich radial zwischen jeder der Wulststrukturen und der entsprechenden Seitenkante des Laufflächenrings erstrecken, wobei das Strukturelement einer des Paars von Seitenwandeinsätzen ist.

5. Reifen nach einem der vorhergehenden Ansprüche, wobei das Oxetanderivat die folgende allgemeine Formel (I) aufweist: 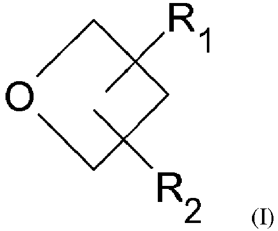 wobei
R₁ eine geradkettige oder verzweigte Alkylgruppe mit 1 bis 6 Kohlenstoffatomen, oder eine geradkettige oder verzweigte Alkylarylgruppe mit 7 bis 12 Kohlenstoffatomen ist, und
R₂ eine geradkettige oder verzweigte Alkylgruppe mit 1 bis 6 Kohlenstoffatomen, oder eine geradkettige oder verzweigte Alkylarylgruppe mit 7 bis 12 Kohlenstoffatomen ist, die optional einen oder mehrere Substituenten umfasst, die ausgewählt sind aus der Gruppe aus Halid, Hydroxy, Alkoxy, Haloalkoxy, Amino, Nitro, Thio, Cyano, Acyl und Acyloxy.

6. Reifen nach Anspruch 5, wobei R₁ und R₂ beide mit der 3-Position des Oxetanrings verknüpft sind.

7. Reifen nach Anspruch 5, wobei R₁ eine geradkettige oder verzweigte Alkylgruppe mit 1 bis 3 Kohlenstoffatomen oder eine verzweigte Alkylarylgruppe mit 7 bis 9 Kohlenstoffatomen, und R₂ eine geradkettige oder verzweigte Alkylgruppe mit 1 bis 3 Kohlenstoffatomen oder eine geradkettige oder verzweigte Alkylarylgruppe mit 7 bis 9 Kohlenstoffatomen ist, die optional einen oder mehrere Substituenten umfasst, die ausgewählt sind aus der Gruppe aus Halid, Hydroxy, Alkoxy, Haloalkoxy, Amino, Nitro, Thio, Cyano, Acyl und Acyloxy.

8. Reifen nach Anspruch 5, wobei das Oxetanderivat ausgewählt ist aus der Gruppe bestehend aus den in der folgenden Tabelle aufgelisteten Verbindungen:
| Verbindung | 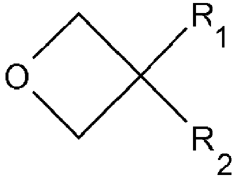 | |
|---|---|---|
| | R₁ | R₂ |
| 1 | -CH₃ | -CH₂OH |
| 2 | -CH₂CH₃ | -CH₂OH |
| 3 | -CH₂CH₂CH₃ | -CH₂OH |
| 4 | -CH₂CH₂CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

9. Reifen nach einem der vorhergehenden Ansprüche, wobei das Oxetanderivat zu der vernetzbaren Elastomerzusammensetzung in einer Menge zugegeben wird, die von 0,1 phr bis 10 phr reicht.

10. Reifen nach einem der vorhergehenden Ansprüche, wobei das Oxetanderivat zu der vernetzbaren Elastomerzusammensetzung in einer Menge zugegeben wird, die von 0,2 phr bis 5 phr reicht.

11. Reifen nach einem der vorhergehenden Ansprüche, wobei die Aminosäure die folgende allgemeine Formel (II) aufweist: 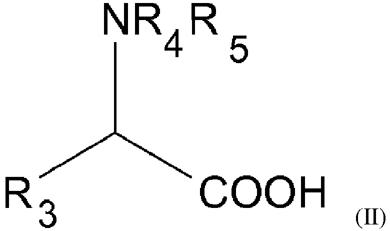 wobei
R₃ Wasserstoff, eine geradkettige oder verzweigte Alkylgruppe mit 1 bis 6 Kohlenstoffatomen, oder eine geradkettige oder verzweigte Alkylarylgruppe mit 7 bis 12 Kohlenstoffatomen ist, die optional einen oder mehrere Substituenten umfasst, die ausgewählt sind aus der Gruppe aus Hydroxy, Alkoxy, Amino, Thio, Dithio, Alkylthio, Alkyldithio, Acyl, Carboxyl, Carboxamido, 4-Imidazol, 3-Indol und Guanidino, und
R₄ und R₅, gleich oder jeweils unterschiedlich, Wasserstoff, eine geradkettige oder verzweigte Alkylgruppe mit 1 bis 6 Kohlenstoffatomen, eine geradkettige oder verzweigte Alkylarylgruppe mit 7 bis 12 Kohlenstoffatomen, oder eine geradkettige oder verzweigte Acylgruppe mit 1 bis 6 Kohlenstoffatomen ist.

12. Reifen nach einem der vorhergehenden Ansprüche, wobei die Aminosäure ausgewählt ist aus der Gruppe bestehend aus Alanin, Arginin, Asparagin, Asparaginsäure, Cystein, Glutaminsäure, Glutamin, Glycin, Histidin, Isoleucin, Leucin, Lysin, Methionin, Phenylalanin, Prolin, Serin, Threonin, Tryptophan, Tyrosin, Valin und dem N-Acylderivat davon.

13. Reifen nach Anspruch 12, wobei die Aminosäure ausgewählt ist aus der Gruppe bestehend aus N-Acetylalanin, N-Acetylcystein, N-Acetylserin, N-Acetylleucin, und N-Acetyllysin.

14. Reifen nach Anspruch 1, wobei die Aminosäure ausgewählt ist aus der Gruppe bestehend aus Cystin, Glutathion, Penicillamin, Hydroxyprolin, Hydroxylysin, Citrullin, Mimosin, Theanin, Phenylglycin, Sarcosin, Ethionin, Buthionin, Norvalin, Norleucin, Carnosin, Luciferin, Felinin, Captopril, N-Glycylleucin und dem N-Acylderivat davon.

15. Reifen nach einem der vorhergehenden Ansprüche, wobei die Aminosäure zu der vernetzbaren Elastomerzusammensetzung in einer Menge zugegeben wird, die von 0,1 phr bis 5 phr reicht.

16. Reifen nach einem der vorhergehenden Ansprüche, wobei das zumindest eine elastomere Polymer (a) ausgewählt ist aus der Gruppe bestehend aus Dien-Elastomerpolymeren oder -copolymeren mit einer Glasübergangstemperatur unter 20 °C.

17. Reifen nach einem der vorhergehenden Ansprüche, wobei der zumindest eine verstärkende Füllstoff (b) ausgewählt ist aus der Gruppe bestehend aus Kohlenstoffruss, Siliziumdioxid, Aluminiumoxid, Aluminiumsilikate, Calciumcarbonat, Kaolin oder Mischungen davon.

18. Reifen nach Anspruch 17, wobei die vernetzbare Elastomerzusammensetzung den verstärkenden Füllstoff in einer Menge von 20 phr bis 90 phr umfasst.

## Revendications

1. Pneu comprenant au moins un élément de structure comportant un matériau élastomère réticulé obtenu par réticulation d'une composition élastomère réticulable comprenant :
(a) 100 phr d'au moins un polymère élastomère ;
(b) 0,1 phr à 120 phr d'au moins une charge de renforcement ;
(c) 0,01 phr à 20 phr d'au moins un dérivé oxétane ; et
(d) 0,01 phr à 10 phr d'au moins un acide aminé.

2. Pneu selon la revendication 1, ledit pneu comprenant :
- une structure de carcasse de forme toroïdale, ayant des bords latéraux opposés associés à des structures de talon droite et gauche respectives définies par un pli de carcasse respectif, lesdites structures de talon comprenant au moins une tringle et au moins un bourrage sur tringle ;
- une structure de ceinture appliquée dans une position radialement externe par rapport à ladite structure de carcasse ;
- une bande de roulement appliquée dans une position radialement externe par rapport à ladite structure de ceinture ;
- une paire de flancs appliqués latéralement sur des faces opposées par rapport à ladite structure de carcasse ;
où ledit élément de structure est au moins l'un(e) parmi ladite bande de roulement, ladite paire de flancs, et ledit bourrage sur tringle.

3. Pneu selon la revendication 2, dans lequel ledit pneu comprend en outre une sous-couche de bande de roulement appliquée dans une position radialement interne par rapport à ladite bande de roulement, où ledit élément de structure est ladite sous-couche de bande de roulement.

4. Pneu selon la revendication 2 ou 3, dans lequel ledit pneu comprend en outre une paire d'inserts de flanc s'étendant radialement entre chacune desdites structures de talon et le bord latéral correspondant de ladite bande de roulement, où ledit élément de structure est au moins l'un de ladite paire d'inserts de flanc.

5. Pneu selon l'une quelconque des revendications précédentes, dans lequel ledit dérivé oxétane possède la formule générale suivante (I) : 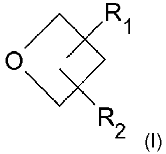 où
R₁ est un groupe alkyle linéaire ou ramifié ayant 1 à 6 atome(s) de carbone, ou un groupe alkylaryle linéaire ou ramifié ayant 7 à 12 atomes de carbone, et
R₂ est un groupe alkyle linéaire ou ramifié ayant 1 à 6 atome(s) de carbone, ou un groupe alkylaryle linéaire ou ramifié ayant 7 à 12 atomes de carbone, comprenant éventuellement un ou plusieurs substituant(s) choisi(s) dans le groupe constitué par un halogénure, des groupes hydroxy, alcoxy, halogénoalcoxy, amino, nitro, thio, cyano, acyle et acyloxy.

6. Pneu selon la revendication 5, dans lequel R₁ et R₂ sont tous deux liés à la position 3 du noyau oxétane.

7. Pneu selon la revendication 5, dans lequel R₁ est un groupe alkyle linéaire ou ramifié ayant 1 à 3 atome(s) de carbone ou un groupe alkylaryle ramifié ayant 7 à 9 atomes de carbone, et R₂ est un groupe alkyle linéaire ou ramifié ayant 1 à 3 atome(s) de carbone, ou un groupe alkylaryle linéaire ou ramifié ayant 7 à 9 atomes de carbone, comprenant éventuellement un ou plusieurs substituant(s) choisi(s) dans le groupe constitué par un halogénure, des groupes hydroxy, alcoxy, halogénoalcoxy, amino, nitro, thio, cyano, acyle et acyloxy.

8. Pneu selon la revendication 5, dans lequel ledit dérivé oxétane est choisi dans le groupe constitué des composés énumérés dans le tableau suivant :
| Composé | 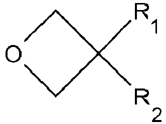 | |
|---|---|---|
| | R₁ | R₂ |
| 1 | -CH₃, | -CH₂OH |
| 2 | -CH₂CH₃ | -CH₂OH |
| 3 | -CH₂CH₂CH₃ | -CH₂OH |
| 4 | -CH₂CH₂CH₂CH₃ | -CH₂OH |
| 5 | -CH₃ | -CH₂CH₂OH |
| 6 | -CH₂CH₃ | -CH₂CH₂CH₂OH |
| 7 | -CH₂CH₂CH₃ | -CH₂CH₂OH |
| 8 | -CH₃ | -CH₂NH₂ |
| 9 | -CH₂CH₃ | -CH₂NH₂ |
| 10 | -CH₃ | -CH₂Br |
| 11 | -CH₂CH₃ | -CH₂Br |
| 12 | -CH₂CH₂CH₂CH₃ | -CH₂Br |
| 13 | -CH₃ | -CH₂Cl |
| 14 | -CH₂CH₃ | -CH₂Cl |
| 15 | -CH₂CH₂CH₃ | -CH₂Cl |
| 16 | -CH₃ | -CH₂O(CH₂)₄Br |
| 17 | -CH₂CH₃ | -CH₂O(CH₂)₄Br |
| 18 | -CH₃ | -CH₂SH |
| 19 | -CH₂CH₃ | -CH₂SH |
| 20 | -CH₃ | -CH₂CH₂SH |

9. Pneu selon l'une quelconque des revendications précédentes, dans lequel ledit dérivé oxétane est ajouté à la composition élastomère réticulable en une quantité allant de 0,1 phr à 10 phr.

10. Pneu selon l'une quelconque des revendications précédentes, dans lequel ledit dérivé oxétane est ajouté à la composition élastomère réticulable en une quantité allant de 0,2 phr à 5 phr.

11. Pneu selon l'une quelconque des revendications précédentes, dans lequel ledit acide aminé possède la formule générale suivante (II) : 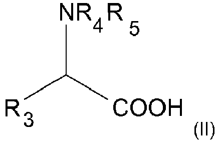 où
R₃ est un atome d'hydrogène, un groupe alkyle linéaire ou ramifié ayant 1 à 6 atome(s) de carbone, ou un groupe arylalkyle linéaire ou ramifié ayant 7 à 12 atomes de carbone, comprenant éventuellement un ou plusieurs substituant(s) choisi(s) dans le groupe constitué par des groupes hydroxy, alcoxy, amino, thio, dithio, alkylthio, alkyldithio, acyle, carboxyle, carboxamido, 4-imidazole, 3-indole, et guanidino, et
R₄ et R₅, identiques ou différents l'un de l'autre, sont un atome d'hydrogène, un groupe alkyle linéaire ou ramifié ayant 1 à 6 atome(s) de carbone, un groupe alkylaryle linéaire ou ramifié ayant 7 à 12 atomes de carbone, ou un groupe acyle linéaire ou ramifié ayant 1 à 6 atome(s) de carbone.

12. Pneu selon l'une quelconque des revendications précédentes, dans lequel ledit acide aminé est choisi dans le groupe constitué par l'alanine, l'arginine, l'asparagine, l'acide aspartique, la cystéine, l'acide glutamique, la glutamine, la glycine, l'histidine, l'isoleucine, la leucine, la lysine, la méthionine, la phénylalanine, la proline, la sérine, la thréonine, le tryptophane, la tyrosine, la valine, et le dérivé N-acyle de ceux-ci.

13. Pneu selon la revendication 12, dans lequel ledit acide aminé est choisi dans le groupe constitué par la N-acétylalanine, la N-acétylcystéine, la N-acétylsérine, la N-acétylleucine, et la N-acétyllysine.

14. Pneu selon la revendication 1, dans lequel ledit acide aminé est choisi dans le groupe constitué par la cystine, le glutathion, la pénicillamine, l'hydroxyproline, l'hydroxylysine, la citrulline, la mimosine, la théanine, la phénylglycine, la sarcosine, l'éthionine, la buthionine, la norvaline, la norleucine, la carnosine, la luciférine, la félinine, le captopril, la N-glycylleucine, et le dérivé N-acyle de ceux-ci.

15. Pneu selon l'une quelconque des revendications précédentes, dans lequel ledit acide aminé est ajouté à la composition élastomère réticulable en une quantité allant de 0,1 phr à 5 phr.

16. Pneu selon l'une quelconque des revendications précédentes, dans lequel ledit au moins un polymère élastomère (a) est choisi dans le groupe comprenant des polymères ou des copolymères élastomères diéniques ayant une température de transition vitreuse inférieure à 20°C.

17. Pneu selon l'une quelconque des revendications précédentes, dans lequel ladite au moins une charge de renforcement (b) est choisie dans le groupe comprenant du noir de carbone, de la silice, de l'alumine, des aluminosilicates, du carbonate de calcium, du kaolin ou des mélanges de ceux-ci.

18. Pneu selon la revendication 17, dans lequel ladite composition élastomère réticulable comprend ladite charge de renforcement en une quantité allant de 20 phr à 90 phr.
